# EUROPEAN PATENT APPLICATION

(11) **EP 4 459 614 A1**
(43) Date of publication of application: **06.11.2024**
(21) Application number: 22915734.2
(22) Date of filing: 15.12.2022
(51) Int. Cl.: G10K 15/04, G01C 21/26, H04R 3/00

(54) **INFORMATION PROCESSING DEVICE, INFORMATION PROCESSING METHOD, PROGRAM, AND MOBILE BODY**

(30) Priority: 27.12.2021 JP 2021212695
(71) Applicant: Sony Group Corporation, Tokyo 108-0075 (JP)
(72) Inventor: NAGAHARA, Junichi, Tokyo 108-0075 (JP); KOMATSU, Hidehiro, Tokyo 108-0075 (JP); IRIYA, Shinichi, Tokyo 108-0075 (JP)
(74) Representative: Witte, Weller & Partner Patentanwälte mbB
(86) International application number: PCT/JP2022/046134
(87) International publication number: WO 2023/127510

(57) **Abstract**

The present technology relates to an information processing device designed to enhance a feeling of driving or steering a mobile object, an information processing method, a program, and the mobile object.

The information processing device includes: a recognition unit that recognizes a state of a mobile object; and an output control unit that controls outputting of an output sound for an occupant, the output sound including a mobile object state sound including a moving sound indicating a change in the moving state of the mobile object and a trigger sound to be output on the basis of a trigger based on the state of the mobile object, the output sound being output toward the occupant of the mobile object. The present technology can be applied to a vehicle, for example.

## Description

### TECHNICAL FIELD

The present technology relates to an information processing device, an information processing method, a program, and a mobile object, and more particularly, to an information processing device designed to enhance a feeling of driving or steering a mobile object, an information processing method, a program, and the mobile object.

### BACKGROUND ART

There has been a suggested vehicle that generates an artificial motor sound corresponding to a rotation speed of the motor of an electric vehicle (EV), and outputs the artificial motor sound inside the vehicle so that the driver can easily recognize a change in the running condition of the EV (see Patent Document 1, for example).

### CITATION LIST

### PATENT DOCUMENT

Patent Document 1: Japanese Patent Application Laid-Open No. 2021-113942

### SUMMARY OF THE INVENTION

### PROBLEMS TO BE SOLVED BY THE INVENTION

However, if only the artificial motor sound is output, the driver might feel uncomfortable, and the driver's feeling of driving the vehicle (drive feeling) might deteriorate, for example.

The present technology has been made in view of such circumstances, and aims to enhance a feeling of driving or steering a mobile object such as a vehicle.

### SOLUTIONS TO PROBLEMS

An information processing device according to a first aspect of the present technology includes: a recognition unit that recognizes a state of a mobile object; and an output control unit that controls outputting of an output sound for an occupant, the output sound including a mobile object state sound including a moving sound indicating a change in the moving state of the mobile object and a trigger sound to be output on the basis of a trigger based on the state of the mobile object, the output sound being output toward the occupant of the mobile object.

An information processing method according to the first aspect of the present technology includes: recognizing a state of a mobile object; and controlling outputting of an output sound for an occupant, the output sound including a mobile object state sound including a moving sound indicating a change in the moving state of the mobile object and a trigger sound to be output on the basis of a trigger based on the state of the mobile object, the output sound being output toward the occupant of the mobile object.

A program according to the first aspect of the present technology causes a computer to perform a process of: recognizing a state of a mobile object; and controlling outputting of an output sound for an occupant, the output sound including a mobile object state sound including a moving sound indicating a change in the moving state of the mobile object and a trigger sound to be output on the basis of a trigger based on the state of the mobile object, the output sound being output toward the occupant of the mobile object.

In the first aspect of the present technology, a state of a mobile object is recognized, and outputting of an output sound for an occupant is controlled, the output sound including a mobile object state sound including a moving sound indicating a change in the moving state of the mobile object and a trigger sound to be output on the basis of a trigger based on the state of the mobile object, the output sound being output toward the occupant of the mobile object.

A mobile object according to a second aspect of the present technology is a mobile object which an occupant rides, the mobile object including: a recognition unit that recognizes a state of the mobile object; an output control unit that controls outputting of an output sound for an occupant, the output sound including a mobile object state sound including a moving sound indicating a change in the moving state of the mobile object and a trigger sound to be output on the basis of a trigger based on the state of the mobile object, the output sound being output toward the occupant; and an output unit that outputs the output sound for the occupant.

In the second aspect of the present technology, a state of a mobile object is recognized, and an output sound for an occupant including a mobile object state sound including a moving sound indicating a change in the moving state of the mobile object and a trigger sound to be output on the basis of a trigger based on the state of the mobile object is output toward the occupant.

### BRIEF DESCRIPTION OF DRAWINGS

Fig. 1 is a block diagram illustrating an example configuration of a vehicle control system.
Fig. 2 is a diagram illustrating examples of sensing areas.
Fig. 3 is a schematic view of the interior of a vehicle as looked down from the right.
Fig. 4 is a schematic view illustrating the front side of the interior of the vehicle.
Fig. 5 is an enlarged view of the vicinity of the steering wheel of the vehicle.
Fig. 6 is a schematic view of the interior of the vehicle as viewed from the front.
Fig. 7 is a block diagram illustrating an example configuration of an information processing unit.
Fig. 8 is a diagram illustrating an example of an instrument panel of a content type.
Fig. 9 is a diagram illustrating an example of an instrument panel of a sport type.
Fig. 10 is a diagram illustrating an example of an instrument panel of a comfort type.
Fig. 11 is a diagram illustrating an example of the structure of sound data.
Fig. 12 is a diagram illustrating an example of an editing screen for output sounds for occupants.

### MODE FOR CARRYING OUT THE INVENTION

The following is a description of modes for carrying out the present technology. Explanation will be made in the following order.
1. Example Configuration of a Vehicle Control System
2. Embodiment
3. Modifications
4. Others

### <<1. Example Configuration of a Vehicle Control System>>

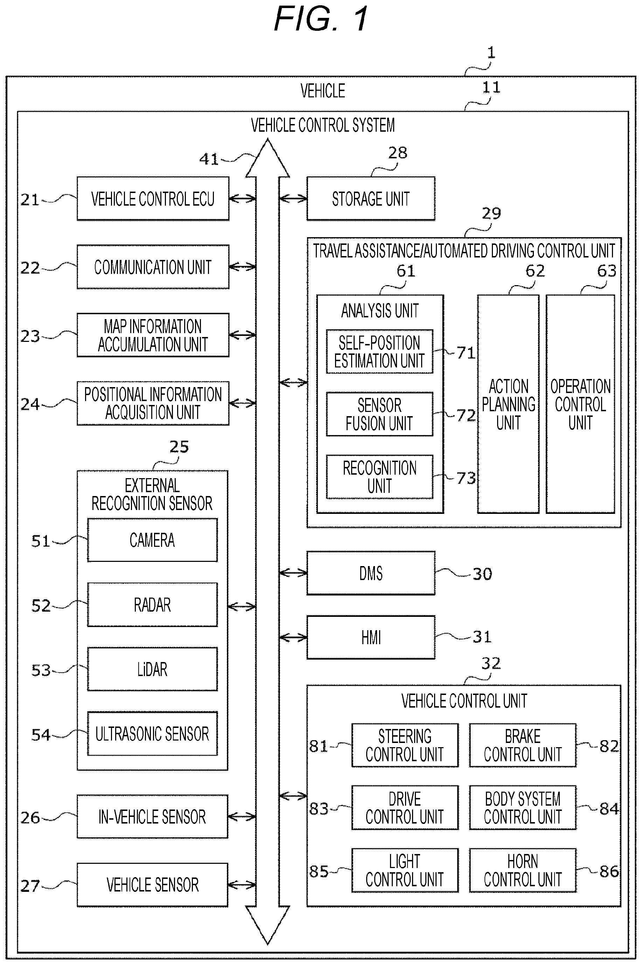

Fig. 1 is a block diagram illustrating an example configuration of a vehicle control system 11 that is an example of a moving apparatus control system to which the present technology is applied.

The vehicle control system 11 is provided in a vehicle 1, and performs processing relating to travel assistance and automated driving of the vehicle 1.

The vehicle control system 11 includes a vehicle control electronic control unit (ECU) 21, a communication unit 22, a map information accumulation unit 23, a positional information acquisition unit 24, an external recognition sensor 25, an in-vehicle sensor 26, a vehicle sensor 27, a storage unit 28, a travel assistance/automated driving control unit 29, a driver monitoring system (DMS) 30, a human machine interface (HMI) 31, and a vehicle control unit 32.

The vehicle control ECU 21, the communication unit 22, the map information accumulation unit 23, the positional information acquisition unit 24, the external recognition sensor 25, the in-vehicle sensor 26, the vehicle sensor 27, the storage unit 28, the travel assistance/automated driving control unit 29, the driver monitoring system (DMS) 30, the human machine interface (HMI) 31, and the vehicle control unit 32 are interconnected so that communication can be performed via a communication network 41. The communication network 41 is formed with an in-vehicle communication network, a bus, and the like that conform to a digital bidirectional communication standard such as the controller area network (CAN), local interconnect network (LIN), local area network (LAN), FlexRay (registered trademark), or Ethernet (registered trademark), for example. The communication network 41 may be selectively used depending on the type of data to be transmitted. For example, the CAN may be applied to data related to vehicle control, and the Ethernet may be applied to large-volume data. Note that, in some cases, the respective components of the vehicle control system 11 are connected directly to each other not via the communication network 41, but with the use of wireless communication intended for a relatively short-range communication, such as near field communication (NFC) or Bluetooth (registered trademark), for example.

Note that, hereinafter, in a case where each component of the vehicle control system 11 performs communication via the communication network 41, explanation of the communication network 41 will be omitted. For example, in a case where the vehicle control ECU 21 and the communication unit 22 perform communication via the communication network 41, it will be simply described as the vehicle control ECU 21 and the communication unit 22 performing communication.

For example, the vehicle control ECU 21 is formed with various processors such as a central processing unit (CPU) and a micro processing unit (MPU). The vehicle control ECU 21 controls all or some of the functions of the vehicle control system 11.

The communication unit 22 communicates with many kinds of devices inside and outside the vehicle, another vehicle, a server, a base station, and the like, and sends and receives various kinds of data. In doing so, the communication unit 22 can perform communication using a plurality of communication schemes.

Communication that can be performed by the communication unit 22 with the outside of the vehicle is now briefly described. The communication unit 22 communicates with a server (hereinafter referred to as an external server) or the like present on an external network via a base station or an access point by a wireless communication system such as fifth generation mobile communication system (5G), long term evolution (LTE), dedicated short range communications (DSRC), or the like, for example. The external network with which the communication unit 22 performs communication include the Internet, a cloud network, a provider-specific network, or the like, for example. The communication scheme by which the communication unit 22 communicates with the external network is not limited to any particular method, as long as it is a wireless communication scheme that enables digital bidirectional communication at a communication speed equal to or higher than a predetermined speed and over a distance equal to or longer than a predetermined distance.

Also, the communication unit 22 can communicate with a terminal present in the vicinity of the host vehicle, using a peer to peer (P2P) technology, for example. The terminal present in the vicinity of the host vehicle is a terminal attached to a mobile object moving at a relatively low speed such as a pedestrian or a bicycle, a terminal stationarily installed in a store or the like, or a machine type communication (MTC) terminal, for example. Further, the communication unit 22 can also perform V2X communication. V2X communication refers to communication between the host vehicle and others, such as vehicle to vehicle communication with another vehicle, vehicle to infrastructure communication with a roadside device or the like, vehicle to home communication, and vehicle to pedestrian communication with a terminal or the like carried by a pedestrian, for example.

The communication unit 22 can receive a program for updating software that controls operations of the vehicle control system 11 from the outside (Over The Air), for example. The communication unit 22 can further receive map information, traffic information, information regarding the surroundings of the vehicle 1, and the like from the outside. Also, the communication unit 22 can send information regarding the vehicle 1, information about the surroundings of the vehicle 1, and the like to the outside, for example. The information regarding the vehicle 1 to be sent to the outside by the communication unit 22 is data indicating a state of the vehicle 1, a recognition result from a recognition unit 73, or the like, for example. Further, the communication unit 22 performs communication compatible with a vehicle emergency call system such as eCall, for example.

The communication unit 22 receives an electromagnetic wave sent by the vehicle information and communication system (VICS) (registered trademark) with a radio wave beacon, an optical beacon, frequency modulation (FM) multiplex broadcasting, or the like, for example.

Communication that can be performed by the communication unit 22 with the inside of the vehicle is now briefly described. The communication unit 22 can communicate with each device in the vehicle, using wireless communication, for example. The communication unit 22 can perform wireless communication with a device in the vehicle by a communication scheme allowing digital bidirectional communication at a communication speed equal to or higher than a predetermined speed by wireless communication, such as wireless LAN, Bluetooth, NFC, or wireless universal serial bus (WUSB), for example. Besides this, the communication unit 22 can also communicate with each device in the vehicle, using wired communication. For example, the communication unit 22 can communicate with each device in the vehicle by wired communication via a cable connected to a connecting terminal not shown in the drawing. The communication unit 22 can communicate with each device in the vehicle by a communication scheme allowing digital bidirectional communication at a communication speed equal to or higher than a predetermined speed by wired communication, such as universal serial bus (USB), high-definition multimedia interface (HDMI) (registered trademark), or mobile high-definition link (MHL), for example.

Here, a device in the vehicle refers to a device that is not connected to the communication network 41 in the vehicle, for example. Possible examples of devices in the vehicle include a mobile device or a wearable device carried by an occupant such as a driver, an information device brought into the vehicle and temporarily installed, and the like.

The map information accumulation unit 23 accumulates either or both of a map acquired from the outside and a map created by the vehicle 1. For example, the map information accumulation unit 23 accumulates a three-dimensional high-precision map, a global map having a lower precision than the precision of the high-precision map but covering a wider area, and the like.

The high-precision map is a dynamic map, a point cloud map, a vector map, or the like, for example. The dynamic map is a map formed with four layers of dynamic information, semi-dynamic information, semi-static information, and static information, and is provided to the vehicle 1 from the external server or the like, for example. The point cloud map is a map formed with a point cloud (point cloud data). The vector map is a map obtained by associating traffic information such as lanes and the positions of traffic lights, and the like with a point cloud map, and adapting the associated point cloud map to the advanced driver assistance system (ADAS) or autonomous driving (AD), for example.

The point cloud map and the vector map may be provided from the external server or the like, for example, or may be created by the vehicle 1 and accumulated in the map information accumulation unit 23 as a map for performing matching with a local map described later, on the basis of a sensing result from a camera 51, a radar 52, a light detection and ranging or laser imaging detection and ranging (LiDAR) 53, or the like. Alternatively, in a case where the high-precision map is provided from the external server or the like, for example, map data of several hundred meters square regarding a planned route on which the vehicle 1 is to travel from now on is acquired from the external server or the like to reduce the communication volume.

The positional information acquisition unit 24 receives a global navigation satellite system (GNSS) signal from a GNSS satellite, and acquires positional information about the vehicle 1. The acquired positional information is supplied to the travel assistance/automated driving control unit 29. Note that the positional information acquisition unit 24 is not necessarily a scheme using a GNSS signal, and may acquire positional information using a beacon, for example.

The external recognition sensor 25 includes various kinds of sensors that are used to recognize a situation outside the vehicle 1, and supplies sensor data from each sensor to each component of the vehicle control system 11. The types and the number of the sensors included in the external recognition sensor 25 are designated as desired.

For example, the external recognition sensor 25 includes the camera 51, the radar 52, the light detection and ranging or laser imaging detection and ranging (LiDAR) 53, and an ultrasonic sensor 54. Besides this, the external recognition sensor 25 may have a configuration including one or more kinds of sensors among the camera 51, the radar 52, the LiDAR 53, and the ultrasonic sensor 54. The numbers of the cameras 51, the radars 52, the LiDARs 53, and the ultrasonic sensors 54 are not limited to any particular numbers, as long as the numbers represent installable numbers of sensors for the vehicle 1. Further, the kinds of sensors included in the external recognition sensor 25 are not limited to this example, and the external recognition sensor 25 may include a sensor of some other type. An example of the sensing area of each sensor included in the external recognition sensor 25 will be described later.

Note that the imaging scheme of the camera 51 is not limited to any particular scheme. For example, cameras of various imaging schemes such as a time of flight (ToF) camera, a stereo camera, a monocular camera, and an infrared camera, which are of imaging schemes capable of distance measurement, can be used for the camera 51 as necessary. Besides this, the camera 51 may be for simply acquiring a captured image without performing distance measurement.

Also, the external recognition sensor 25 can include an environmental sensor for detecting an environment of the vehicle 1, for example. The environmental sensor is a sensor for detecting an environment such as weather, climate, and brightness, and can include various sensors such as a raindrop sensor, a fog sensor, a sunshine sensor, a snow sensor, and an illuminance sensor, for example.

Further, the external recognition sensor 25 includes a microphone that is used for detection and the like of a sound around the vehicle 1 or a position of a sound source, for example.

The in-vehicle sensor 26 includes various kinds of sensors for detecting information about the inside of the vehicle, and supplies sensor data from each sensor to each component of the vehicle control system 11. The types and the number of the various sensors included in the in-vehicle sensor 26 are not limited to any particular types and number, as long as the types and the number represent realistically installable types and number for the vehicle 1.

For example, the in-vehicle sensor 26 can include one or more types of sensors among a camera, a radar, a seating sensor, a steering wheel sensor, a microphone, and a biometric sensor. As the cameras included in the in-vehicle sensor 26, for example, cameras of various imaging schemes capable of measuring a distance, such as a ToF camera, a stereo camera, a monocular camera, and an infrared camera, can be used. In addition to these cameras, a camera included in the in-vehicle sensor 26 may be a camera that simply acquires a captured image, without performing distance measurement. The biometric sensor included in the in-vehicle sensor 26 is disposed on a seat, a steering wheel, or the like, for example, and detects various kinds of biological information about an occupant such as the driver.

The vehicle sensor 27 includes various sensors for detecting a state of the vehicle 1, and supplies sensor data from each sensor to each component of the vehicle control system 11. The types and the number of the various sensors included in the vehicle sensor 27 are not limited to any particular kinds and number, as long as the types and the number represent realistically installable types and number for the vehicle 1.

For example, the vehicle sensor 27 includes a speed sensor, an acceleration sensor, an angular velocity sensor (gyroscopic sensor), and an inertial measurement unit (IMU) obtained by integrating these sensors. For example, the vehicle sensor 27 includes a steering angle sensor that detects a steering angle of the steering wheel, a yaw rate sensor, an accelerator sensor that detects an operation amount of the accelerator pedal, and a brake sensor that detects an operation amount of the brake pedal. For example, the vehicle sensor 27 includes a rotation sensor that detects the number of rotations of the engine or the motor, an air pressure sensor that detects an air pressure of a tire, a slip rate sensor that detects a slip rate of the tire, and a wheel speed sensor that detects a rotation speed of a wheel. For example, the vehicle sensor 27 includes a battery sensor that detects a state of charge and temperature of the battery, and an impact sensor that detects an external impact.

The storage unit 28 includes at least either a nonvolatile storage medium or a volatile storage medium, and stores data and programs. The storage unit 28 is used as, for example, an electrically erasable programmable read only memory (EEPROM) and a random access memory (RAM), and a magnetic storage device such as a hard disc drive (HDD), a semiconductor storage device, an optical storage device, and a magneto-optical storage device can be used as a storage medium. The storage unit 28 stores various kinds of programs and data to be used by the respective components of the vehicle control system 11. For example, the storage unit 28 includes an event data recorder (EDR) and a data storage system for automated driving (DSSAD), and stores information about the vehicle 1 before and after an event such as an accident, and information acquired by the in-vehicle sensor 26.

The travel assistance/automated driving control unit 29 controls travel assistance and automated driving of the vehicle 1. For example, the travel assistance/automated driving control unit 29 includes an analysis unit 61, an action planning unit 62, and an operation control unit 63.

The analysis unit 61 performs an analysis process on the vehicle 1 and a situation around the vehicle 1. The analysis unit 61 includes a self-position estimation unit 71, a sensor fusion unit 72, and the recognition unit 73.

The self-position estimation unit 71 estimates the self-position of the vehicle 1, on the basis of sensor data from the external recognition sensor 25 and the high-precision map accumulated in the map information accumulation unit 23. For example, the self-position estimation unit 71 generates a local map on the basis of sensor data from the external recognition sensor 25, and performs matching between the local map and the high-precision map, to estimate the self-position of the vehicle 1. The position of the vehicle 1 is based on the center of the axle for the pair of rear wheels, for example.

The local map is a three-dimensional high-precision map created by a technology such as simultaneous localization and mapping (SLAM), an occupancy grid map, or the like, for example. The three-dimensional high-precision map is the above-described point cloud map or the like, for example. The occupancy grid map is a map in which a three-dimensional or two-dimensional space around the vehicle 1 is divided into grids (lattices) of a predetermined size, and an occupancy state of an object is indicated in units of grids. The occupancy state of the object is indicated by the presence/absence or existence probability of the object, for example. The local map is also used in a detection process and a recognition process for a situation outside the vehicle 1 by the recognition unit 73, for example.

Note that the self-position estimation unit 71 may estimate the self-position of the vehicle 1, on the basis of the positional information acquired by the positional information acquisition unit 24 and the sensor data from the vehicle sensor 27.

The sensor fusion unit 72 performs a sensor fusion process to obtain new information by combining a plurality of different kinds of sensor data (image data supplied from the camera 51 and sensor data supplied from the radar 52, for example). The method for combining different kinds of sensor data includes integration, fusion, association, and the like.

The recognition unit 73 performs a detection process to detect a situation outside the vehicle 1, and a recognition process to recognize the situation outside the vehicle 1.

For example, the recognition unit 73 performs a detection process and a recognition process to detect and recognize a situation outside the vehicle 1, on the basis of information from the external recognition sensor 25, information from the self-position estimation unit 71, information from the sensor fusion unit 72, and the like.

Specifically, the recognition unit 73 performs a detection process, a recognition process, and the like to detect and recognize objects present around the vehicle 1, for example. An object detection process is a process of detecting the presence/absence, size, shape, position, motion, and the like of an object, for example. An object recognition process is a process of recognizing an attribute such as the type of an object, or identifying a specific object, for example. However, a detection process and a recognition process are not necessarily clearly divided, and overlap in some cases.

For example, the recognition unit 73 performs clustering to classify point clouds based on sensor data from the radar 52, the LiDAR 53, or the like into clusters of point clouds, to detect objects present around the vehicle 1. In this manner, the presence/absence, size, shape, and position of an object around the vehicle 1 are detected.

For example, the recognition unit 73 performs tracking to follow a motion of a cluster of point clouds classified by clustering, to detect a motion of an object present around the vehicle 1. In this manner, the speed and the traveling direction (movement vector) of an object present around the vehicle 1 are detected.

For example, the recognition unit 73 detects or recognizes a vehicle, a person, a bicycle, an obstacle, a structure, a road, a traffic light, a traffic sign, a road sign, and the like, on the basis of image data supplied from the camera 51. Also, the recognition unit 73 may recognize the type of an object present around the vehicle 1 by performing a recognition process such as semantic segmentation.

For example, the recognition unit 73 can perform a recognition process to recognize traffic rules around the vehicle 1, on the basis of the map accumulated in the map information accumulation unit 23, a result of self-position estimation performed by the self-position estimation unit 71, and a result of an object recognition performed by the recognition unit 73 to recognize objects present around the vehicle 1. Through this process, the recognition unit 73 can recognize the positions and the states of traffic lights, the contents of traffic signs and road signs, the contents of the traffic regulations, the driving-allowed lanes, and the like.

For example, the recognition unit 73 can perform a recognition process to recognize the surrounding environment of the vehicle 1. The surrounding environment to be recognized by the recognition unit 73 may include weather, air temperature, humidity, brightness, road surface conditions, and the like.

The action planning unit 62 creates an action plan for the vehicle 1. For example, the action planning unit 62 creates an action plan by performing a path planning and path following process.

Note that, global path planning is a process for roughly planning a path from a start to a goal. This path planning includes a process of performing path generation (local path planning) called a path planning that enables safe and smooth traveling in the vicinity of the vehicle 1, with the motion characteristics of the vehicle 1 being taken into consideration in the planned path.

The path following is a process of planning an operation for safely and accurately traveling along a path planned by the path planning within a planned time. For example, the action planning unit 62 can calculate the target speed and the target angular velocity of the vehicle 1, on the basis of a result of the path following process.

The operation control unit 63 controls operations of the vehicle 1 to achieve the action plan created by the action planning unit 62.

For example, the operation control unit 63 controls a steering control unit 81, a brake control unit 82, and a drive control unit 83 included in the vehicle control unit 32 described later, and performs acceleration and deceleration control and direction control so that the vehicle 1 follows the path calculated by the local path planning. For example, the operation control unit 63 performs coordinated control to achieve ADAS functions such as collision avoidance or impact mitigation, follow-up running, vehicle-speed maintaining running, warning of collision of the host vehicle, warning of lane departure of the host vehicle, and the like. For example, the operation control unit 63 performs coordinated control to perform automated driving or the like in which the vehicle autonomously runs without depending on the operation by a driver.

The DMS 30 performs an authentication process on the driver, a recognition process on a state of the driver, and the like, on the basis of sensor data from the in-vehicle sensor 26, data input to the HMI 31 described later, and the like. The state of the driver to be recognized may be a physical condition, an alertness level, a concentration level, a fatigue level, a line-of-sight direction, a drunkenness level, a driving operation, a posture, or the like, for example.

Note that the DMS 30 may perform an authentication process on an occupant other than the driver, and a recognition process to recognize the state of the occupant. Furthermore, the DMS 30 may perform a recognition process to recognize the conditions inside the vehicle, on the basis of sensor data from the in-vehicle sensor 26, for example. The conditions inside the vehicle to be recognized may be temperature, humidity, brightness, odor, and the like, for example.

The HMI 31 receives inputs of various kinds of data, instructions, and the like, and presents various kinds of data to the driver and the like.

An input of data through the HMI 31 is now roughly described. The HMI 31 includes an input device for a person to input data. The HMI 31 generates an input signal on the basis of data, an instruction, or the like that has been input through the input device, and supplies the input signal to each component of the vehicle control system 11. The HMI 31 includes an operation element such as a touch panel, a button, a switch, and a lever as the input device, for example. In addition to this, the HMI 31 may further include an input device capable of inputting information by a method such as voice, gesture, or the like that is not a manual operation. Moreover, the HMI 31 may use a remote control device using infrared rays or radio waves, for example, or an external connection device such as a mobile device or a wearable device as an input device compatible with operations of the vehicle control system 11.

Presentation of data by the HMI 31 is now roughly described. The HMI 31 generates visual information, audio information, and haptic information regarding an occupant or the outside of a vehicle. Also, the HMI 31 performs output control to control outputting, output contents, an output timing, an output method, and the like of each piece of the generated information. The HMI 31 generates and outputs, as the visual information, information indicated by images or light of an operation screen, a display of the state of the vehicle 1, a warning display, a monitor image indicating a situation around the vehicle 1, and the like, for example. Also, the HMI 31 generates and outputs, as the audio information, information indicated by sounds, such as voice guidance, a warning sound, and a warning message, for example. Further, the HMI 31 generates and outputs, as the haptic information, information to be given to the tactile sense of an occupant by force, vibration, motion, or the like, for example.

As the output device through which the HMI 31 outputs the visual information, a display device that presents the visual information by displaying an image, or a projector device that presents the visual information by projecting an image can be used, for example. Note that, other than a display device having a conventional display, the display device may be a device that displays the visual information in the field of view of an occupant, such as a head-up display, a transmissive display, or a wearable device having an augmented reality (AR) function, for example. Furthermore, in the HMI 31, a display device included in a navigation device, an instrument panel, a camera monitoring system (CMS), an electronic mirror, a lamp, or the like provided in the vehicle 1 can also be used as the output device that outputs the visual information.

As the output device through which the HMI 31 outputs the audio information, an audio speaker, headphones, or earphones can be used, for example.

As the output device through which the HMI 31 outputs the haptic information, a haptic element using a haptic technology can be used, for example. The haptic element is disposed at a portion to be touched by an occupant of the vehicle 1, such as the steering wheel or a seat, for example.

The vehicle control unit 32 controls each component of the vehicle 1. The vehicle control unit 32 includes the steering control unit 81, the brake control unit 82, the drive control unit 83, a body system control unit 84, a light control unit 85, and a horn control unit 86.

The steering control unit 81 performs detection, control, and the like of a state of the steering system of the vehicle 1. The steering system includes a steering mechanism including the steering wheel and the like, an electric power steering, and the like, for example. The steering control unit 81 includes a steering ECU that controls the steering system, an actuator that drives the steering system, and the like, for example.

The brake control unit 82 performs detection, control, and the like of a state of the brake system of the vehicle 1. The brake system includes a brake mechanism including a brake pedal and the like, an antilock brake system (ABS), a regenerative brake mechanism, and the like, for example. The brake control unit 82 includes a brake ECU that controls the brake system, an actuator that drives the brake system, and the like, for example.

The drive control unit 83 performs detection, control, and the like of a state of the drive system of the vehicle 1. The drive system includes an accelerator pedal, a driving force generation device for generating a driving force, such as an internal combustion engine or a driving motor, a driving force transmission mechanism for transmitting the driving force to the wheels, and the like, for example. The drive control unit 83 includes a drive ECU that controls the drive system, an actuator that drives the drive system, and the like, for example.

The body system control unit 84 performs detection, control, and the like of a state of the body system of the vehicle 1. The body system includes a keyless entry system, a smart key system, a power window device, a power seat, an air conditioner, an airbag, a seat belt, a shift lever, and the like, for example. The body system control unit 84 includes a body system ECU that controls the body system, an actuator that drives the body system, and the like, for example.

The light control unit 85 performs detection, control, and the like of states of various lights of the vehicle 1. The lights to be controlled may be the headlight, the backing light, a fog light, a turn signal, a brake light, a projection, a bumper display, and the like are assumed, for example. The light control unit 85 includes a light ECU that controls the lights, an actuator that drives the lights, and the like.

The horn control unit 86 performs detection, control, and the like of a state of the car horn of the vehicle 1. The horn control unit 86 includes a horn ECU that controls the car horn, an actuator that drives the car horn, and the like, for example.

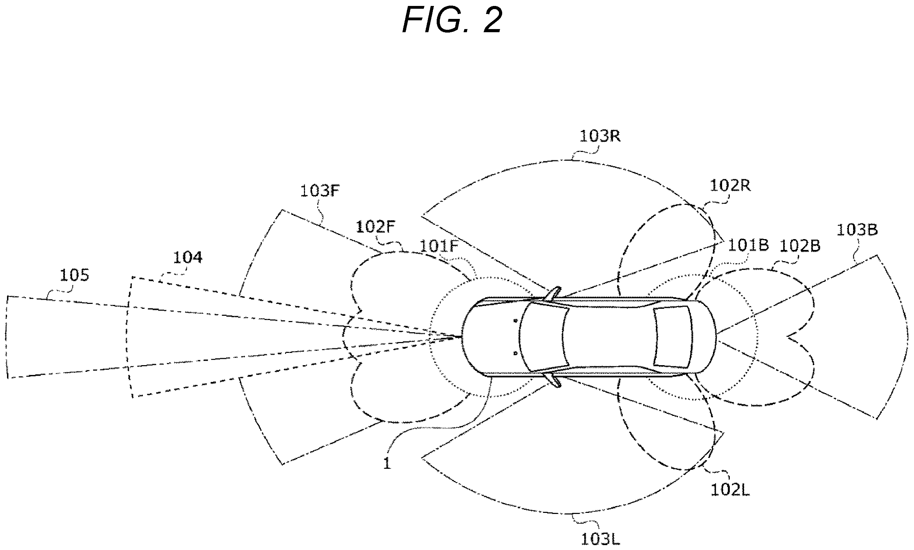

Fig. 2 is a diagram illustrating examples of sensing areas of the camera 51, the radar 52, the LiDAR 53, the ultrasonic sensor 54, and the like of the external recognition sensor 25 in Fig. 1. Note that Fig. 2 schematically illustrates the vehicle 1 as viewed from above, in which the left end side is the front end (front) side of the vehicle 1, and the right end side is the rear end (rear) side of the vehicle 1.

A sensing area 101F and a sensing area 101B indicate examples of the sensing area of the ultrasonic sensors 54. The sensing area 101F covers an area around the front end of the vehicle 1 with a plurality of the ultrasonic sensors 54. The sensing area 101B covers an area around the rear end of the vehicle 1 with a plurality of the ultrasonic sensors 54.

Sensing results in the sensing area 101F and the sensing area 101B are used in parking assistance and the like for the vehicle 1, for example.

Sensing areas 102F to 102B indicate examples of the sensing area of short-range or medium-range radars 52. The sensing area 102F covers an area extending to a position farther than the sensing area 101F in front of the vehicle 1. The sensing area 102B covers an area extending to a position farther than the sensing area 101B behind the vehicle 1. The sensing area 102L covers an area around the rear left side of the vehicle 1. The sensing area 102R covers an area around the rear right side of the vehicle 1.

A sensing result in the sensing area 102F is used in detection and the like of a vehicle, a pedestrian, or the like present in front of the vehicle 1, for example. A sensing result in the sensing area 102B is used in a collision prevention function and the like behind the vehicle 1, for example. Sensing results in the sensing area 102L and the sensing area 102R are used in detection and the like of an object in a blind spot on the sides of the vehicle 1, for example

Sensing areas 103F to 103B indicate examples of the sensing areas of the cameras 51. The sensing area 103F covers an area extending to a position farther than the sensing area 102F in front of the vehicle 1. The sensing area 103B covers an area extending to a position farther than the sensing area 102B behind the vehicle 1. The sensing area 103L covers an area around the left side of the vehicle 1. The sensing area 103R covers an area around the right side of the vehicle 1.

A sensing result in the sensing area 103F can be used in recognition of a traffic light or a traffic sign, a lane departure prevention assist system, and an automatic headlight control system, for example. A sensing result in the sensing area 103B can be used in parking assistance, a surround view system, and the like, for example. Sensing results in the sensing area 103L and the sensing area 103R can be used in a surround view system, for example.

A sensing area 104 indicates an example of the sensing area of the LiDAR 53. The sensing area 104 covers an area extending to a position farther than the sensing area 103F in front of the vehicle 1. However, the sensing area 104 has a narrower range in a lateral direction than the sensing area 103F.

A sensing result in the sensing area 104 is used in detection of an object such as a vehicle in the vicinity, for example.

A sensing area 105 is an example of the sensing area of the radar 52 for a long range. The sensing area 105 covers an area extending to a position farther than the sensing area 104 in front of the vehicle 1. However, the sensing area 105 has a narrower range in a lateral direction than the sensing area 104.

A result of sensing in the sensing area 105 is used in adaptive cruise control (ACC), emergency braking, collision avoidance, and the like, for example.

Note that the sensing areas of the respective sensors, which are the cameras 51, the radars 52, the LiDAR 53, and the ultrasonic sensors 54 included in the external recognition sensor 25, may have various configurations other than those illustrated in Fig. 2. Specifically, the ultrasonic sensors 54 may also perform sensing on the sides of the vehicle 1, or the LiDAR 53 may perform sensing behind the vehicle 1. Also, the installation position of each sensor is not limited to each corresponding example described above. Furthermore, the number of sensors of each kind may be one or larger.

### <<2. Embodiment>>

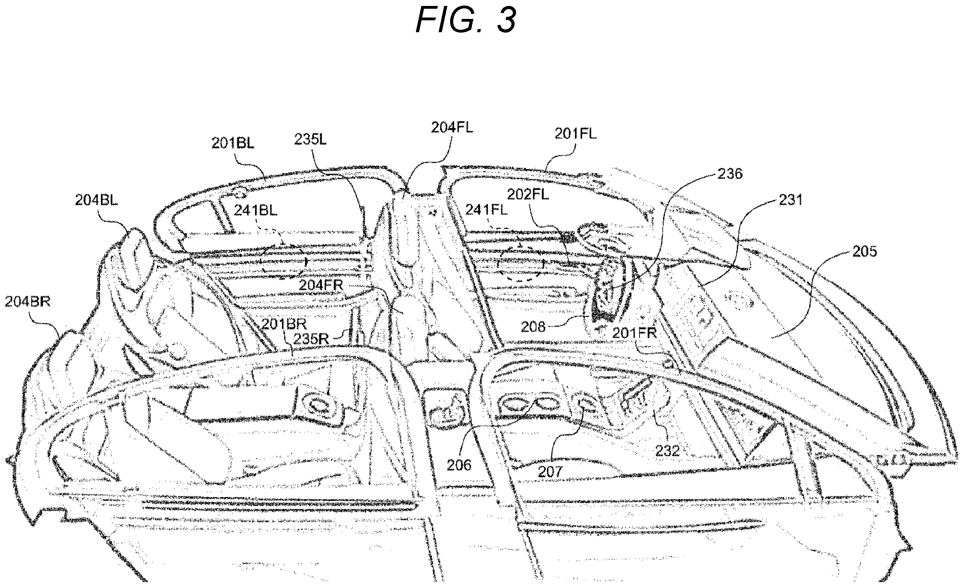

Next, an embodiment of the present technology is described with reference to Figs. 3 to 12.

### <Example Configuration of the Interior of the Vehicle 1>

First, an example configuration of the interior of the vehicle 1 is described with reference to Figs. 3 to 6.

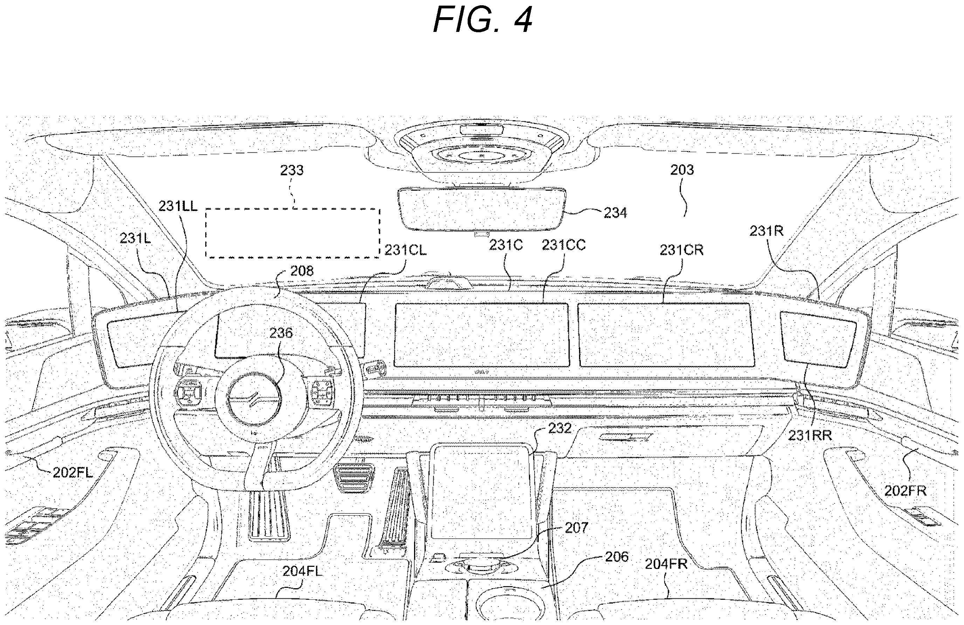

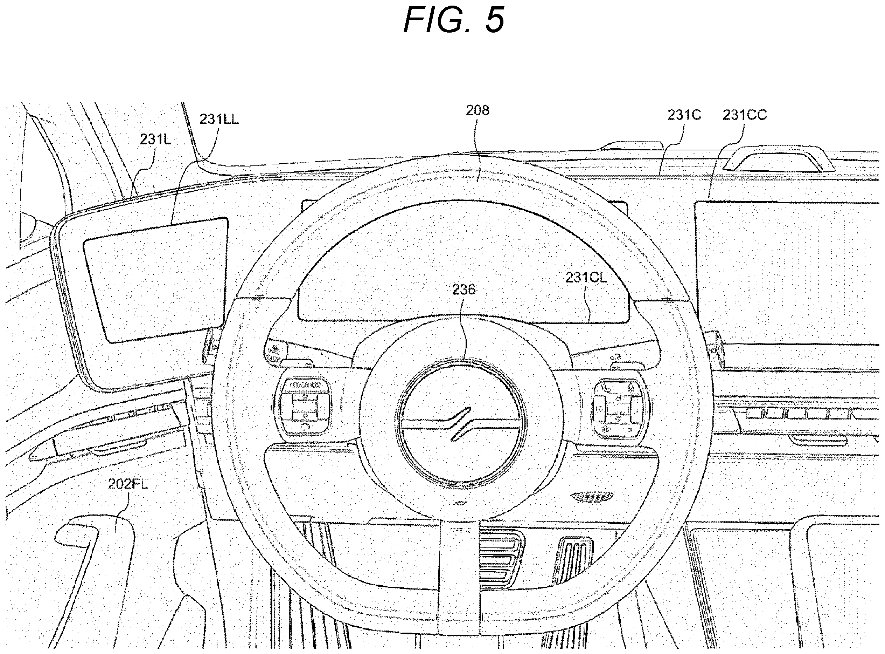

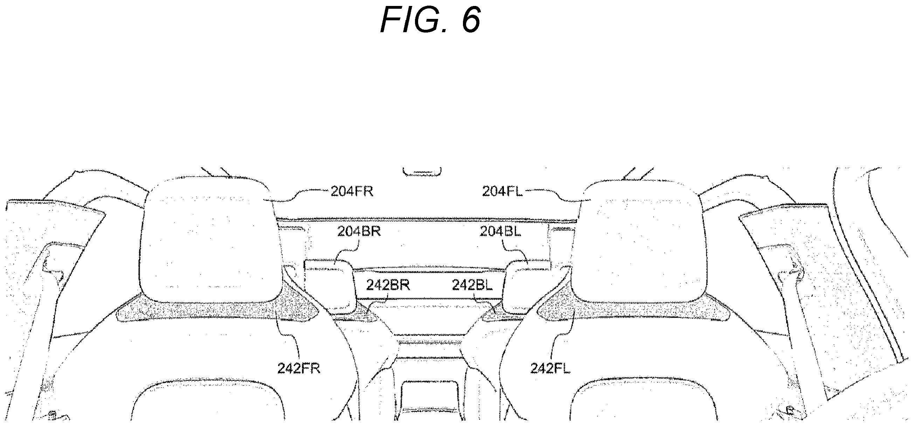

Fig. 3 is a schematic view of the inside of the vehicle 1 as viewed from the right. Fig. 4 is a schematic view illustrating the front side of the interior of the vehicle 1. Fig. 5 is an enlarged view of the vicinity of a steering wheel 208 of the vehicle 1. Fig. 6 is a schematic view of the interior of the vehicle 1 as viewed from the front.

Note that, hereinafter, doors 201FL to 201BR will be referred simply to as doors 201 in a case where there is no need to distinguish the doors from one another. Hereinafter, a driver's seat 204FL, a front passenger seat 204FR, a back seat 204BL, and a back seat 204BR will be referred to simply as seats 204 in a case where there is no need to distinguish the seats from one another. Hereinafter, seat speakers 242FL to 242BR will be referred to simply as seat speakers 242 in a case where there is no need to distinguish the seat speakers from one another.

### <Example Configuration of Displays>

First, an example configuration of displays inside the vehicle 1 is described.

In the interior of the vehicle 1, a center display 231, a console display 232, a head-up display (only a display 233 is shown), a digital rearview mirror 234, a tablet terminal 235L, and a tablet terminal 235R are provided.

As illustrated in Fig. 4, the center display 231 is provided in front of the driver's seat 204FL and the front passenger seat 204FR so as to extend to the left and right on the front surface of a dashboard 205. The center display 231 is roughly divided into a left end portion 231L, a center portion 231C, and a right end portion 231R, depending on the orientation of the display. That is, the center display 231 has a configuration in which the left end portion 231L, the center portion 231C, and the right end portion 231R having different orientations are continuous in a lateral direction and are integrated. The left end portion 231L, the center portion 231C, and the right end portion 231R can perform display independently of one another, or can perform display collectively.

In front of the driver's seat 204FL and the front passenger seat 204FR, the center portion 231C extends in a lateral direction from the vicinity of the left end of the driver's seat 204FL to the vicinity of the right end of the front passenger seat 204FR, and is directed rearward as viewed from the driver's seat 204FL or the front passenger seat 204FR (the rear of the vehicle 1).

For example, the center portion 231C displays information for assisting driving, an image around the vehicle 1, or the like. For example, the center portion 231C displays information regarding the running condition and the like of the vehicle 1. For example, the center portion 231C displays an operating state of a direction indicator of the vehicle 1. For example, the center portion 231C displays a velocity and a shift position of the vehicle 1. For example, the center portion 231C displays a remaining battery life of the vehicle 1. For example, the center portion 231C displays an image indicating a situation of the road ahead. For example, the center portion 231C displays information for assisting parking when the vehicle 1 is parked.

For example, the center portion 231C can display part of an image of 360 degrees around the vehicle 1 captured by the camera 51, and rotate the display range. For example, the center portion 231C displays a bird's-eye view image of the periphery of the vehicle 1 viewed from above, the bird's-eye view image having been obtained by combining images from a plurality of the cameras 51.

For example, the center portion 231C displays an image of the scenery behind the vehicle 1 when the vehicle 1 moves backward. For example, the center portion 231C displays information indicating a predicted traveling direction in a case where a lane keep assist (LKA) function is operating when the vehicle 1 is moving backward.

Note that, in this example, the center portion 231C of the center display 231 is divided into a display portion 231CL in front of the driver's seat 204FL, a display portion 231CC between the driver's seat 204FL and the front passenger seat 204FR, and a display portion 231CR in front of the front passenger seat 204FR. For example, it is also possible to form one display portion by connecting the display portions 231CL to 231CR. For example, it is also possible to form one display portion by connecting the display portion 231CL and the display portion 231CC. For example, it is also possible to form one display portion by connecting the display portion 231CC and the display portion 231CR. Further, the examples of display described above can be displayed on any display portion of the center portion 231C.

Note that, for example, an instrument panel mainly indicating information for the driver is displayed on the display portion 231CL. For example, information for assisting driving is displayed on the instrument panel. For example, information related to infotainment (vehicle-mounted infotainment) such as audio, video, a website, and a map is displayed on the display portion 231CC. For example, infotainment-related information for the occupant in the front passenger seat is displayed on the display portion 231CR.

The left end portion 231L and the right end portion 231R of the center display 231 are disposed substantially symmetrically at both left and right ends of the center display 231. The left end portion 231L is bent inward (toward the inside of the vehicle) at the left end of the center display 231, is angled in the vehicle interior direction with respect to the center portion 231C, and is directed diagonally rearward to the right (diagonally rearward to the right rear of the vehicle 1) as viewed from the driver's seat 204FL or the front passenger seat 204FR. The right end portion 231R is bent inward (toward the inside of the vehicle) at the right end of the center display 231, is angled inward with respect to the center portion 231C, and is directed diagonally rearward to the left (diagonally rearward to the left rear of the vehicle 1) as viewed from the driver's seat 204FL or the front passenger seat 204FR.

The angle of the left end portion 231L with respect to the center portion 231C is adjusted so that the angle of reflection of a standard line of sight of the driver with respect to the angle of incidence on the left end portion 231L is to face an appropriate direction diagonally rearward to the left rear of the vehicle 1, for example. The angle of the right end portion 231R with respect to the center portion 231C is adjusted so that the angle of reflection of a standard line of sight of the driver with respect to the angle of incidence on the right end portion 231R is to face an appropriate direction diagonally rearward to the right rear of the vehicle 1, for example.

A display portion 231LL is provided at the left end portion 231L. A display portion 231RR is provided at the right end portion 231R.

The left end portion 231L and the right end portion 231R of the center display 231 are mainly used as digital outer mirrors (electronic side mirrors) that replace conventional side mirrors. That is, the left end portion 231L and the right end portion 231R are used for the CMS. For example, the display portion 231LL of the left end portion 231L displays an image of the scenery diagonally behind the left side of the vehicle 1 as captured by the camera 51. The display portion 231RR of the right end portion 231R displays an image of the scenery diagonally behind the right side of the vehicle 1 as captured by the camera 51.

Note that the left end portion 231L, the center portion 231C, and the right end portion 231R of the center display 231 are continuous in a horizontal direction. Accordingly, in a case where the driver shifts the line of sight from the center portion 231C to the left end portion 231L or the right end portion 231R, or shifts the line of sight from the left end portion 231L or the right end portion 231R to the center portion 231C, the driver is only required to move the line of sight in a horizontal direction. As a result, the moving distance and the moving direction of the line of sight of the driver are shortened, and visibility is enhanced.

Furthermore, for example, the left end portion 231L displays an alert in a case where a vehicle, a motorcycle, a bicycle, a pedestrian, or the like approaching from the left or from behind the vehicle 1 is detected. Likewise, the right end portion 231R displays an alert in a case where a vehicle, a motorcycle, a bicycle, a pedestrian, or the like approaching from the right or from behind the vehicle 1 is detected.

Note that a vehicle or the like approaching from the right or left, or from behind the vehicle 1 is detected by the recognition unit 73 on the basis of an image (sensor data) from the camera 51, sensor data from the radar 52 and the LiDAR 53B, and the like, for example.

Note that, since the left end portion 231L, the center portion 231C, and the right end portion 231R are connected as one, it is possible to display one screen on the entire center display 231. For example, it is possible to display an image of the surroundings of the vehicle 1, map information, infotainment-related information, or the like on the entire center display 231.

As illustrated in Figs. 3 and 4, the console display 232 is provided on a console 206 provided between the driver's seat 204FL and the front passenger seat 204FR, and is located below the center portion 231C of the center display 231.

Specifically, the console 206 extends in a forward/rearward direction between the driver's seat 204FL and the front passenger seat 204FR. The front end portion of the console 206 is inclined obliquely upward toward the front of the vehicle 1, and the console display 232 is disposed thereon.

The console display 232 is formed with a two-dimensional or three-dimensional touch panel, for example, and can be operated by bringing a finger or the like into contact with or the vicinity of the touch panel. The console display 232 faces the rear of the vehicle 1. Also, the console display 232 faces diagonally upward at an angle substantially similar to that of the center portion 231C of the center display 231. Because of this, a sense of unity is generated in which the center display 231 and the console display 232 are joined into one. Also, visibility of the console display 232 is enhanced, as in the center portion 231C of the center display 231.

For example, the console display 232 displays an operation screen for operating the air-conditioning equipment in the vehicle. An occupant such as the driver operates the air conditioner in the vehicle, using the displayed operation screen.

For example, the console display 232 displays an operation screen for operating information that is displayed on the center display 231. For example, an occupant such as the driver performs scrolling, enlarging, reducing, switching, and the like of information (a map or the like, for example) displayed on the center portion 231C of the center display 231, using the displayed operation screen.

As described above, the center display 231 and the console display 232 have a sense of unity. Therefore, an occupant can operate the information displayed on the center display 231, using the operation screen on the console display 232 with a natural feeling, and thus, operability is enhanced.

For example, the console display 232 displays an operation screen for setting the display ranges of the display portion 231LL and the display portion 231RR of the center display 231. For example, the driver performs zooming in and out, moving, or the like on the display ranges of the display portion 231LL and the display portion 231RR, using the displayed operation screen.

The middle portion of the console 206 is inclined diagonally downward toward the front of the vehicle 1, contrary to the front end portion. A circular controller 207 is provided near the center of the middle portion. The inclination angle of the middle portion of the console 206 is set to an angle at which the driver can easily place his or her hand on the middle portion, which enhances operability of the controller 207.

The controller 207 can be pushed, turned, or tilted in a predetermined direction (forward, rearward, leftward, or rightward, for example), and is used for operating an audio system in the vehicle, for example. For example, when the controller 207 is pushed, music is started or stopped. When the controller 207 is turned, the sound volume is adjusted.

The rear end portion of the console 206 is substantially horizontal, so that the driver can easily place his or her arm thereon, for example.

As illustrated in Fig. 4, the head-up display includes the display 233 provided in front of the driver's seat 204FL. For example, the display 233 may be formed with part of a windshield 203, or may be provided separately from the windshield 203. In the latter case, the display 233 is attached to the windshield 203, for example. Visual information is then projected onto the display 233 by an AR technology, so that the visual information is displayed in the field of view of the driver in an overlapping manner.

The display 233 of the head-up display displays information for assisting driving, for example. For example, the display 233 displays an alert, depending on the situation around the vehicle 1. For example, the display 233 displays information indicating a vehicle in front to be followed, while ACC (Adaptive Cruise Control) is in operation. For example, the display 233 displays a planned route to travel with an arrow or the like as necessary, while a lane change assist function is in operation.

The digital rearview mirror 234 is used in place of the conventional rearview mirror, and is also called a smart room mirror. Like the conventional rearview mirror, the digital rearview mirror 234 is provided near the upper end of the windshield 203 and slightly before the center thereof, and is disposed above the center portion 231C of the center display 231, as illustrated in Fig. 4.

The digital rearview mirror 234 displays an image of the scenery behind the vehicle 1 captured by the camera 51, for example. For example, the digital rearview mirror 234 displays an alert in a case where another vehicle is approaching from behind the vehicle 1.

Also, the display range of the digital rearview mirror 234 is adjusted on the basis of at least one of the line-of-sight direction and the posture of the driver, for example. Thus, the range of the image displayed on the digital rearview mirror 234 is appropriately adjusted in accordance with the line-of-sight direction or the posture of the driver, as with a conventional physical rearview mirror.

As illustrated in Fig. 3, the tablet terminal 235L is disposed on the back surface of the driver's seat 204FL, or more specifically, on the back surface of the headrest of the driver's seat 204FL.

The tablet terminal 235L presents infotainment-related information to the occupant in the back seat 204BL, for example, and accepts an operation about the presented information. Also, the tablet terminal 235L displays an alert at a time of emergency, danger, or the like, for example.

Further, as illustrated in Fig. 3, the tablet terminal 235R similar to the tablet terminal 235L is disposed on the back surface of the front passenger seat 204FR, for example.

As illustrated in Fig. 5, an illumination 236 is provided at the center portion of the steering wheel 208. The illumination 236 includes a plurality of LEDs arranged in a ring-like shape inside by a predetermined distance from the outer periphery of the center portion of the steering wheel 208. Switching on and off, color, brightness, and the like of each LED can be controlled individually. Accordingly, the illumination 236 can change in color, brightness, and light emitting area (light emitting range). Inside the illumination 236, the logo of the vehicle 1 is formed.

Note that an airbag (not shown) is housed in the center portion of the steering wheel 208. Further, the illumination 236 is located so as to avoid a portion where the center portion of the steering wheel 208 is split when the airbag is activated. Thus, debris and harmful substances from the illumination 236 can be prevented from scattering when the airbag is activated.

As described above, by displaying various kinds of information on each display in the vehicle, it is possible to enhance convenience for an occupant such as the driver. For example, it is possible to assist the driving of the vehicle 1, provide necessary information to the occupants, and entertain the occupants.

### <Installation Positions of Speakers>

Next, an example of installation positions of speakers inside the vehicle 1 is described.

As illustrated in Fig. 3, a speaker 241FL is embedded in the vicinity of the rear of a door opener 202FL of the door 201FL on the side of the driver's seat 204FL. Although not shown in the drawings, a speaker 241FR is embedded in the vicinity of the rear of a door opener 202FR of the door 201FR on the side of the front passenger seat 204FR. A speaker 241BL is embedded near the center of the door 201BL on the side of the back seat 204BL. Although not illustrated in the drawings, a speaker 241BR is embedded near the center of the door 201BR on the side of the back seat 204BR.

As illustrated in Fig. 6, the seat speaker 242FL is embedded below the headrest of the driver's seat 204FL. The seat speaker 242FR is embedded below the headrest of the front passenger seat 204FR. The seat speaker 242BL is embedded in the back seat 204BL on the left side. The seat speaker 242BR is embedded in the back seat 204BR on the right side.

Note that the shapes of the seats 204 and the positions of the seat speakers 242 are adjusted so that persons of various heights (sitting heights) can clearly hear the sound from the seat speakers 242 of the respective seats 204.

The speakers 241FL to 241BR embedded in the doors 201FL to 201BR are used to output sound directed to the inside of the entire vehicle (all the occupants in the vehicle), for example. Also, 360-degree real audio is achieved with the speakers 241FL to 241FR. As the 360-degree real audio is achieved, it is possible to enjoy a video, music, and the like inside the vehicle, with sound having a realistic feeling thereto, for example. Also, a notification of the position of a dangerous object such as an obstacle existing around the vehicle 1 can be sent through the output direction of sound.

Meanwhile, the seat speakers 242 of the respective seats 204 are used mainly to output private sound for the individual occupants sitting in the respective seats 204, for example. That is, the sound that is output from each of the seat speakers 242 is individually controlled.

Note that the arrangement of the speakers is an example, and can be changed. For example, a speaker may be disposed on the dashboard 205 in a front portion of the vehicle 1.

### <Example Configuration of an Information Processing Unit 261>

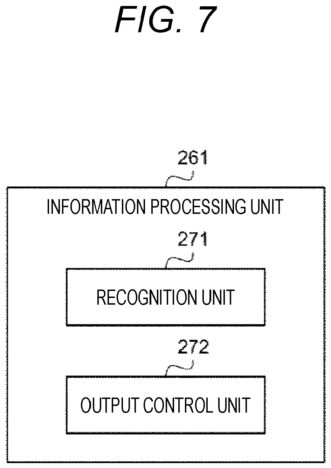

Next, an example configuration of an information processing unit 261 formed with the vehicle control system 11 illustrated in Fig. 1 is described with reference to Fig. 7.

The information processing unit 261 performs display on a display inside the vehicle 1, control of sound output from the speakers, and the like. The information processing unit 261 includes a recognition unit 271 and an output control unit 272.

The recognition unit 271 is formed with the DMS 30, the vehicle control unit 32, and the recognition unit 73 shown in Fig. 1, for example. The recognition unit 271 performs a recognition process and a detection process to recognize and detect a situation in which the vehicle 1 is placed, a situation inside the vehicle, states of occupants including the driver, and a state of each component of the vehicle 1. The situations in which the vehicle 1 may be placed include a situation around the vehicle 1 (including a geographical situation around the vehicle 1), a situation inside the vehicle, a temporal situation in which the vehicle 1 is running (a season, a time zone, a day of the week, a holiday, an anniversary, or the like, for example), and the like, for example.

The output control unit 272 performs a process of generating visual information and audio information, and a process of controlling outputs of the visual information and the audio information, on the basis of the situation in which the vehicle 1 is placed, the state of an occupant, the state of each component of the vehicle 1, an operation by an occupant, and the like. For example, the output control unit 272 performs a process of generating sound to be output for occupants (hereinafter referred to as output sounds for occupants), and a process of controlling outputs of the sound inside the vehicle 1, on the basis of the situation in which the vehicle 1 is placed, the states of the occupants, the state of each component of the vehicle 1, an operation performed by an occupant, and the like.

### <Examples of Output Sounds for Occupants>

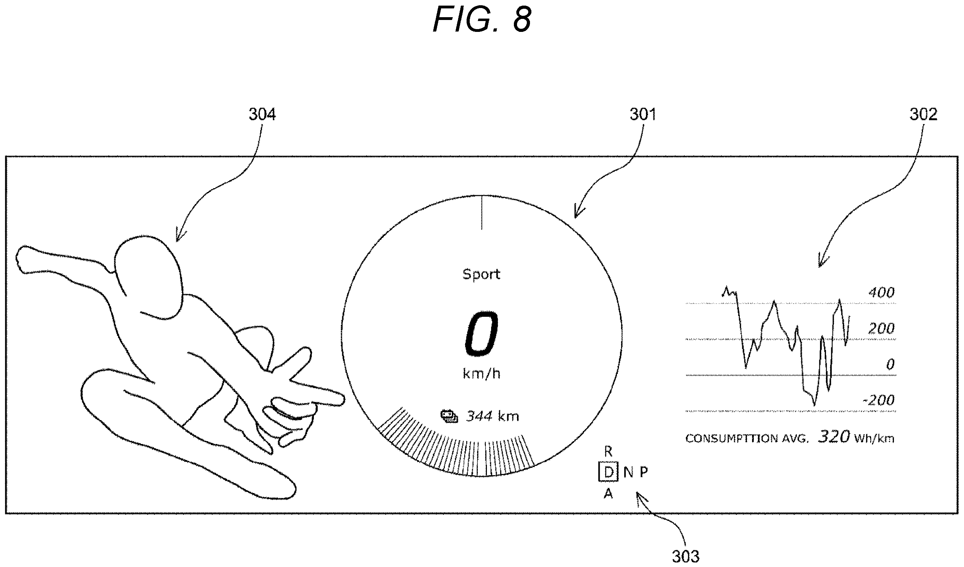

Next, examples of output sounds for occupants are described with reference to Figs. 8 to 12.

Output sounds for occupants include vehicle state sounds and sound effects, for example.

### <Examples of Vehicle State Sounds>

A vehicle state sound is output on the basis of the state of the vehicle 1, and is a sound for notifying an occupant (the driver in particular) in the vehicle of the state of the vehicle 1. Vehicle state sounds include running sounds and trigger sounds, for example.

### <Example of a Running Sound>

A running sound is a sound indicating a change in the running condition of the vehicle 1, and is a sound corresponding to a motor sound or an engine sound of the vehicle 1, for example. A running sound is continuously output during running of the vehicle 1, for example, and dynamically changes depending on the acceleration rate, the velocity, the rotation speed of the motor or the engine, and the like.

### <Examples of Trigger Sounds>

A trigger sound is a sound that is output on the basis of a trigger based on the state of the vehicle 1.

For example, a trigger sound is output, with the trigger being the start of stepping on the accelerator pedal. That is, the trigger sound is output when acceleration of the vehicle 1 is started.

For example, a trigger sound is output, with the trigger being the start of stepping on the brake pedal. That is, the trigger sound is output when deceleration of the vehicle 1 by the brake is started.

For example, a trigger sound is output on the basis of a trigger based on the velocity of the vehicle 1. Specifically, for example, the trigger sound is output when the velocity of the vehicle 1 exceeds the legal speed. For example, the trigger sound is output every time the velocity of the vehicle 1 changes by a predetermined value (10 km/h, for example).

For example, a trigger sound is output on the basis of a trigger based on automated control of the headlights. Specifically, for example, the trigger sound is output when the vehicle 1 enters a tunnel or the like, the surroundings become dark, and the headlights are automatically turned on. For example, the trigger sound is output when the surroundings become bright due to the exit of the vehicle 1 from the tunnel or the like, and the headlights are automatically turned off.

Note that the respective trigger sounds are not necessarily all different. For example, some of the trigger sounds may be the same.

### <Examples of Sound Effects>

Sound effects include navigation sounds, operation sounds, guiding sounds, achievement sounds, and occupant sounds, for example.

### <Examples of Navigation Sounds>

A navigation sound is a sound that is output for navigation for a destination.

For example, a navigation sound is output when the vehicle departs for a destination.

For example, a navigation sound is output when the vehicle arrives at a destination.

Note that the respective navigation sounds are not necessarily all different. For example, some of the navigation sounds may be the same.

### <Examples of Operation Sounds>

An operation sound is a sound that is output in response to an operation performed on the vehicle 1.

For example, an operation sound is output when a running-related operation is performed. Specifically, for example, an operation sound is output at a time of power-on or power-off of the vehicle 1, at a time of gear change, at a time of activation or stop of the windshield wipers, and at a time of activation of the blinker. For example, an operation sound is output when the steering wheel 208 is turned off. Specifically, for example, an operation sound is output when the steering wheel 208 is rotated leftward or rightward by a predetermined angle or more. For example, an operation sound is output when the air suspension rises or falls. For example, an operation sound is output when the spoiler operates. For example, an operation sound is output when the automated driving is turned on or off. For example, an operation sound is output when the button for the car horn (horn) is pushed.

For example, an operation sound is output when the HVAC (heating, ventilation, and air conditioning) of the vehicle 1 is operated. The HVAC of the vehicle 1 includes an air conditioner, a defroster, a seat heater, and the like, for example. Specifically, for example, an operation sound is output when the HVAC is started or stopped, or the settings (temperature, air volume, wind direction, and the like, for example) are changed.

For example, an operation sound is output when an operation related to in-vehicle entertainment is performed. Specifically, for example, an operation sound is output when the sound volume of the car audio is changed, or when muting is turned on or off. For example, an operation sound is output at a time of skipping a tune or returning to the top of a tune.

Note that the respective operation sounds are not necessarily all different. For example, some of the operation sounds may be the same.

### <Examples of Warning Sounds>

A warning sound is a sound for giving a warning to an occupant such as the driver, and calling for attention.

Specifically, for example, a warning sound is output when dozing of the driver is detected. Note that, for example, in a case where the sound mode described later is set to a character mode, a warning sound imitating the voice of a character related to sleep is output.

For example, a warning sound is output when dangerous driving is detected. Specifically, for example, a warning sound is output in a case where lanes are changed without the blinker being turned on. For example, a warning sound is output when there is a risk of collision or contact with another vehicle, a pedestrian, an obstacle, or the like during running or parking. For example, a warning sound is output when driving (such as overspeeding, for example) that violates the traffic rules is detected. For example, a warning sound is output when the vehicle 1 tries to enter a place where entry is prohibited.

For example, a warning sound is output when a possibility of leaving a child is detected. Specifically, for example, the warning sound is output when the occupants other than the child get out of the vehicle, and all the doors are closed while the child is left in the vehicle. In this case, the warning sound is desirably output not only inside the vehicle but also outside the vehicle. Note that, for example, in a case where the sound mode described later is set to the character mode, a warning sound imitating the voice of a child character is output.

For example, a warning sound is output when a possibility of leaving something behind is detected. Specifically, for example, the warning sound is output when all the occupants get out of the vehicle, and all the doors are closed while a predetermined object (such as a bag, for example) is left in the vehicle. In this case, the warning sound is desirably output not only inside the vehicle but also outside the vehicle.

Note that the respective warning sounds are not necessarily all different. For example, some of the warning sounds may be the same.

### <Examples of Achievement Sounds>

An achievement sound is a sound that is output when driving of the vehicle 1 is regarded as if it were a game, and a matter related to driving is achieved by the vehicle 1 or an occupant, for example.

Specifically, for example, an achievement sound is output when eco-friendly driving is performed. Specifically, for example, the achievement sound is output when the electricity consumption or the fuel consumption by the vehicle 1 reaches a target value.

For example, an achievement sound is output on the basis of the value shown on an odometer. Specifically, for example, the achievement sound is output when the odometer shows a round value (such as a value in which the last four digits are 0, for example). For example, the achievement sound is output every time the value shown on the odometer increases by 100 km in one day.

For example, an achievement sound is output every time a predetermined time (one year, for example) has elapsed since the purchase date of the vehicle 1 or the first driving date.

For example, an achievement sound is output when the vehicle 1 crosses a border such as a border between countries or prefectures.

For example, an achievement sound is output when the level of safe driving by the driver becomes higher. The level of safe driving is determined on the basis of the manner of stepping on the brake, the manner of acceleration and deceleration, the gravitational acceleration (G) applied to the vehicle 1, the duration of safe driving, and the like, for example. Note that, for example, every time the level of safe driving increases, a reward (such as special video content or music content, for example) may be given to the driver.

For example, an achievement sound is output when a task is completed, the number of accumulated points reaches a predetermined value, or the level becomes higher in a positional information game using the vehicle 1.

Note that the respective achievement sounds are not necessarily all different. For example, some of the achievement sounds may be the same.

### <Examples of Occupant Sounds>

An occupant sound is a sound that is output in accordance with the state (an external state and an internal state) of an occupant such as the driver.

For example, an occupant sound is output on the basis of movement of an occupant. Specifically, for example, the occupant sound is output in accordance with movement of an occupant when the occupant stretches, turns back, opens a plastic bottle lid, or the like. For example, in a case where it is detected that a child who is an occupant has started sleeping, the occupant sound is output, and the other occupants are notified that the child has started sleeping.

For example, an occupant sound is output on the basis of the psychological state of an occupant. Specifically, for example, the occupant sound is output in a case where the driver's emotion recognized by the recognition unit 271 has changed, or in a case where the recognized driver's emotion has reached a predetermined emotion (such as irritation or calmness, for example).

Note that the respective occupant sounds are not necessarily all different. For example, some of the occupant sounds may be the same.

### <Examples of Sound Modes>

For example, a plurality of sound modes may be provided in the vehicle 1 so that sound modes can be changed. The sound modes are modes indicating the types of output sounds for occupants. For example, when sound modes are changed, at least one of the output sounds for occupants is changed to a sound based on the concept of the sound mode after the change.

For example, the following sound modes are provided in the vehicle 1.

- Gentle sound mode
- Sporty mode
- Other-vehicle mode
- Other-mobile-object mode
- Content mode
- Anthropomorphic mode
- Suppression mode

The gentle sound mode and the sporty mode are examples of characteristics modes indicating the characteristics of output sounds for occupants.

In the gentle sound mode, for example, at least one of the output sounds for occupants is set to a gentle sound that sounds gentle to the ear. For example, the running sound or the like is set to a sound having 1/f fluctuations.

In the sporty mode, for example, at least one of the output sounds for occupants is set to a sporty and light sound. For example, the running sound is set to a sound that reminds the occupants of a car race such as Formula 1 (F1).

The other-vehicle mode is a mode for imitating a sound of another vehicle of a different type from the vehicle 1. For example, at least one of the output sounds for occupants is set to a sound imitating a sound of another vehicle. For example, the running sound is set to a sound imitating a motor sound or an engine sound of another vehicle.

Examples of the other vehicles in the other-vehicle mode include the past or current great cars, racing cars, fictitious vehicles appearing in movies, and the like. For example, an occupant may be allowed to select a desired vehicle from among a plurality of other vehicle candidates.

The other-mobile-object mode is a mode for imitating a sound of a mobile object of a different type from the vehicle. For example, at least one of the output sounds for occupants is set to a sound imitating a sound of another mobile object. For example, the running sound is set to a sound imitating a sound that is output when another mobile object is moving (such as a sound of flight of a combat aircraft or a sound of running of a carriage, for example).

Examples of mobile objects in the other-mobile-object mode include a combat aircraft, a motorcycle, a steam locomotive, a carriage, and the like. For example, an occupant may be allowed to select a desired mobile object from among a plurality of other mobile object candidates.

The content mode is a mode for expressing the world view of entertainment content such as a movies, animations, comics, and computer games. For example, at least one of the output sounds for occupants is set to a sound expressing the world view of certain content.

Specifically, for example, the running sound is set to a sound imitating a tune or a sound effect used in certain content. For example, some of the trigger sounds and the sound effects are set to sounds imitating a tune and a sound effect that are used in certain content. For example, some of the trigger sounds and the sound effects are set to sounds imitating a character that appears in the content. For example, a message sound including a specific message among the trigger sounds and the sound effects is set to a sound imitating the voice (including barking or the like) or tone of a character appearing in the content.

Note that, for example, an occupant may be allowed to select desired content from among a plurality of pieces of content.

Also, for example, the content to be used in the content mode may be updated as appropriate. For example, the sound data to be used for the output sounds for occupants corresponding to the latest content is selected or created by a content creator, and is distributed as needed after the end of broadcasting or the like.

The anthropomorphic mode is a mode for personifying the vehicle 1. For example, the vehicle 1 is set as a fictitious personified character, and at least one of the output sounds for occupants is set to a sound that is emitted by the set character. For example, one of the trigger sounds and the sound effects is set to a message sound that sounds as if the set character were speaking to an occupant.

Note that, for example, an occupant may be allowed to select a desired character from among a plurality of characters. For example, an occupant may be allowed to select the voice to be uttered by the character, from among a plurality of voice candidates. Examples of the voice candidates include voices of famous persons (such as actors, voice actors, and singers, for example).

Note that, in a case where a voice agent having a voice assistant function or the like is brought into the vehicle, for example, the vehicle 1 and the voice agent may cooperate to set the vehicle 1 as the character of the voice agent in the anthropomorphic mode.

The suppression mode is a mode for suppressing outputs of the output sounds for occupants. For example, outputs of the output sounds for occupants are reduced to the minimum necessary, or the sound volume of the output sounds for occupants is lowered. For example, among the output sounds for occupants, outputs of the sounds other than the sounds that need to be output for the purpose of safety and the like are stopped.

Note that all the output sounds for occupants are not necessarily different among the respective sound modes, and some of the output sounds for occupants may be shared among a plurality of sound modes.

### <Method for Setting Parameters of Sound Modes and Output Sounds for Occupants>

For example, a sound mode may be set by an occupant performing a setting operation, or may be automatically set by the vehicle 1. Also, for example, whether an occupant is allowed to set a sound mode, and whether a sound mode is automatically set may be set by the occupant.

In a case where an occupant sets a sound mode, for example, the sound mode may be indirectly set on the basis of the theme (design) of the instrument panel set by the occupant.

Figs. 8 to 10 illustrate examples of instrument panels that can be displayed on the display portion 231CL of the center display 231.

Fig. 8 illustrates an example of an instrument panel of a content type. The instrument panel of the content type is an instrument panel on a theme of entertainment content. In other words, it is an instrument panel expressing the world view of entertainment content.

A speedometer 301 is displayed at the center of the instrument panel. The speedometer 301 digitally displays the vehicle speed. Also, a travelable distance with the current amount of charge is displayed on the speedometer 301.

On the right side of speedometer 301, electricity consumption information 302 is displayed. The electricity consumption information 302 shows a graph showing changes in the electricity consumption and the current electricity consumption.

On the lower right of the speedometer 301, shift position information 303 indicating a set position of the shift position is displayed.

On the left side of the speedometer 301, for example, an image 304 of a main character of the content is displayed. Although not illustrated in the drawing, the background of the instrument panel is also set as an image expressing the world view of the content.

For example, in a case where the instrument panel of the content type is selected, the sound mode is set to the content mode corresponding to the content being used for the instrument panel.

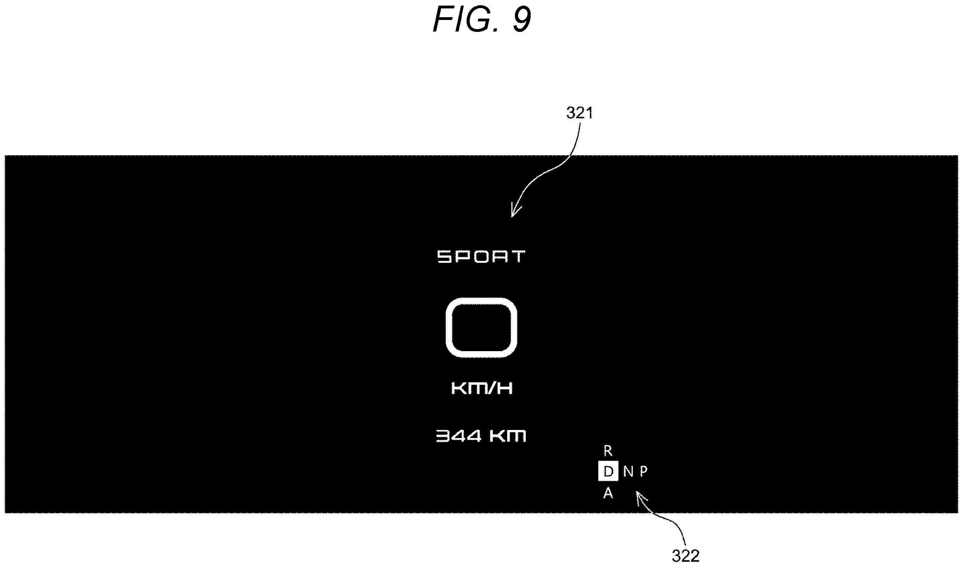

Fig. 9 illustrates an example of an instrument panel of a sport type. An instrument panel of a sport type is an instrument panel having a sporty image as a theme. In this example, an instrument panel that has a very simple design without waste and gives the impression of a sports car such as a racing car is shown.

A speedometer 321 is displayed at the center of the instrument panel. The speedometer 321 digitally displays the vehicle speed. Also, a travelable distance with the current amount of charge is displayed on the speedometer 321.

On the lower right of the speedometer 321, shift position information 322 indicating a set position of the shift position is displayed.

For example, in a case where the instrument panel of the sport type is selected, the sound mode is set to the sporty mode.

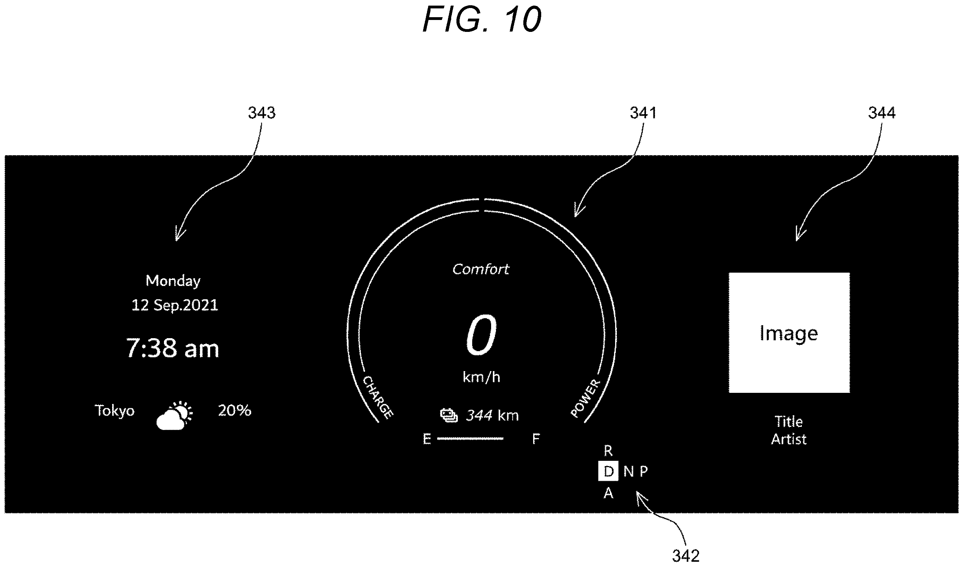

Fig. 10 illustrates an example of an instrument panel of a comfort type. An instrument panel of a comfort type is an instrument panel with a comfort theme. In this example, an instrument panel with a balanced, eye-friendly design is shown.

A speedometer 341 is displayed at the center of the instrument panel. The speedometer 341 digitally displays the vehicle speed. Also, a travelable distance with the current amount of charge is displayed on the speedometer 341.

On the lower right of the speedometer 341, shift position information 342 indicating a set position of the shift position is displayed.

To the left of the speedometer 341, weather information 343 is displayed. The weather information 343 shows the current date, time, and day of the week, and weather forecast and rainfall probability in the area where the vehicle is running.

To the right of the speedometer 341, music information 344 is displayed. The music information 344 shows an image related to the tune being played (such as an image of the CD cover or the artist's thumbnail, for example), the title of the tune, and the artist's name.

For example, in a case where the instrument panel of the comfort type is selected, the sound mode is set to the gentle sound mode.

On the other hand, in a case where a sound mode is automatically set, for example, the output control unit 272 sets a sound mode on the basis of at least one of the situation in which the vehicle 1 is placed, the state of the vehicle 1, and the state of an occupant.

Also, for example, while the sound mode is fixed, all or some parameters (such as size, height, and tone, for example) of the output sounds for occupants are changed on the basis of various parameters. That is, even in the same sound mode, all or some of the output sounds for occupants are changed on the basis of various parameters.

Here, the various parameters are parameters indicating at least one of the situation in which the vehicle 1 is placed, the state of the vehicle 1, and the state of an occupant, for example. In the description below, specific examples of the parameters are explained.

For example, all or some of the parameters of the output sounds for occupants are changed on the basis of the operating state of the regenerative brake. Specifically, for example, the parameter of the running sound is changed on the basis of the presence/absence of an operation of the regenerative brake.

For example, all or some of the parameters of the output sounds for occupants are changed on the basis of the power of the vehicle 1. Specifically, the parameter of the running sound is changed on the basis of the power of the vehicle 1, for example.

For example, all or some of the parameters of the output sounds for occupants are changed on the basis of the velocity of the vehicle 1. Specifically, the parameter of the running sound is changed on the basis of the power of the vehicle 1, for example.

For example, all or some of the parameters of the output sounds for occupants are changed on the basis of drive modes. The drive modes are classified into an eco mode, a sport mode, and a comfort mode, for example. The eco mode is a mode in which vehicle running is performed with priority given to reduction of electricity consumption or fuel consumption, for example. The sport mode is a mode in which vehicle running is performed with priority given to acceleration performance or power, for example. The comfort mode is a mode in which vehicle running is performed with priority given to ride comfort, for example. For example, all or some of the parameters of the output sounds for occupants are changed so that a sound suitable in each drive mode is emitted.

For example, all or some of the parameters of the output sounds for occupants are changed on the basis of times of the day. The times of the day are classified into morning, daytime, and night, for example. For example, all or some of the parameters of the output sounds for occupants are changed so that a sound suitable for the time of the day during which the vehicle is running is emitted. In the morning, for example, the parameter of the running sound is set so that a lively sound is emitted. At night, for example, the parameter of the running sound is set so that a quiet sound is emitted.

For example, all or some of the parameters of the output sounds for occupants are changed on the basis of the attribute of the occupant. Specifically, all or some parameters of the output sounds for occupants are changed on the basis of the attributes of the passenger(s) other than the driver, for example. The attributes of the passenger(s) are classified into no fellow passengers, a family, a partner, a guest, a child, and the like, for example. On the basis of the attribute of a passenger, for example, all or some of the parameters of the output sounds for occupants are changed so that a sound suitable for the passenger or a sound based on the preference of the passenger is emitted. For example, in a case where there are no passengers, the parameter of the running sound or the like is changed on the basis of the preference of the driver. For example, in a case where the passenger is a child, the parameter of the running sound or the like is changed on the basis of the preference of the child.

For example, all or some of the parameters of the output sounds for occupants are changed on the basis of the situation around the vehicle 1.

Specifically, in a case where the vehicle 1 is running in nature, for example, the parameter of the running sound or the like is changed so that a natural sound (such as the sound of the wind, the sound of the river, or an echo, for example) is included in some of the output sounds for occupants. For example, in a case where the vehicle 1 is running in an urban area, the parameter of the running sound or the like is changed so that the running sound includes an urban sound.

For example, all or some of the parameters of the output sounds for occupants are changed on the basis of the weather around the vehicle 1. The weather is classified into sunny weather, clear weather, cloudy weather, rain, snow, fog, and the like, for example. For example, the parameter of the running sound or the like is changed so that the running sound becomes a sound suitable for the weather around the vehicle 1.

For example, all or some of the parameters of the output sounds for occupants are changed on the basis of the current season. For example, in a special season such as New Year's Day or Christmas Day, all or some of the parameters of the output sounds for occupants are changed so that a sound symbolic of the season is emitted. For example, one of the output sounds for occupants is changed to a sound including a tune of gagaku on New Year's Day, or one of the output sounds for occupants is changed to a sound including the sound of bells on Christmas Day.

For example, all or some of the parameters of the output sounds for occupants are changed on the basis of the place where the vehicle 1 is running. For example, a message sound among the output sounds for occupants is changed to a message sound using a dialect or an accent of the place where the vehicle is running.

Note that, in a case where a sound mode is automatically set, one or more of the parameters described above may be used as the setting condition.

As the output sounds for occupants change on the basis of combinations of sound modes and parameters in this manner, a wider variety of output sounds for occupants can be used.

### <Example Configuration of Sound Data>

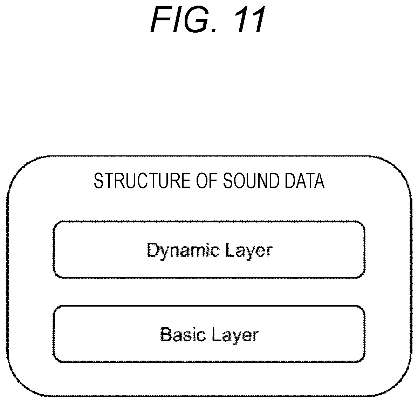

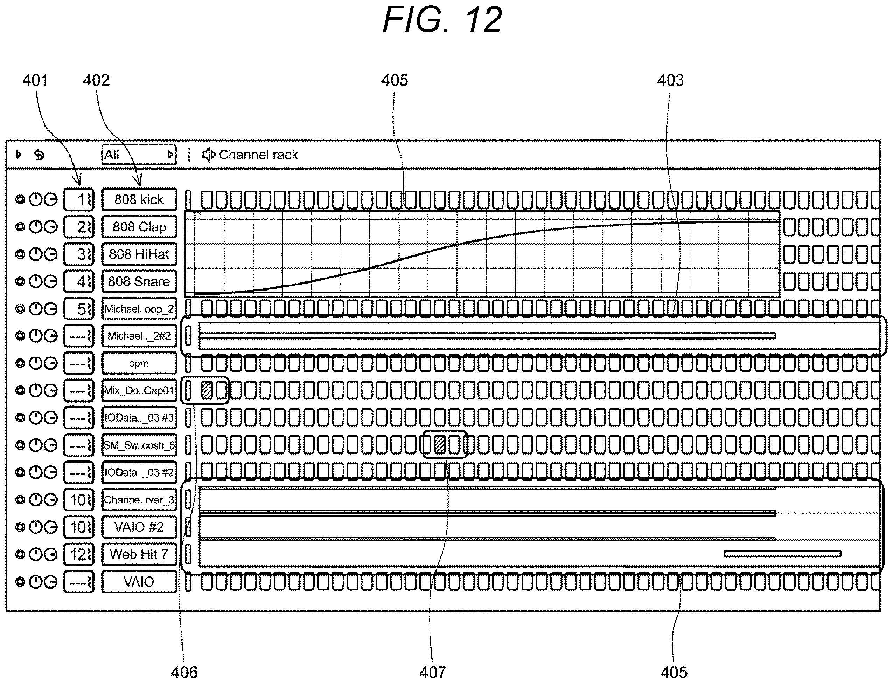

Next, an example configuration of sound data to be used for the above output sounds for occupants is described with reference to Figs. 11 and 12.

As illustrated in Fig. 11, sound data is managed in the two layers of a basic layer and a dynamic layer.

The basic layer represents running conditions and the like of the vehicle 1, for example, and includes sound data to be used for sounds that have great influence on driving. Specifically, the basic layer includes sound data to be used for running sounds, for example.

The dynamic layer includes sound data to be used for sounds that have small influence on driving. Specifically, the dynamic layer includes sound data to be used for trigger sounds and sound effects, for example.

The sound data included in the basic layer and the sound data included in the dynamic layer are updated as appropriate when the sound data is received from a server or the like, for example. In this manner, a new sound mode or a new output sound for occupants is added, or an existing output sound for occupants is updated, for example.

However, having great influence on driving, the sound data included in the basic layer can be updated in a case where a silent state during parking or the like is permitted, with safety being taken into consideration, for example. Accordingly, the sound data to be used for running sounds is updated in a case where a silent state is permitted. Thus, a trouble such as a stop of the running sound during vehicle running due to a failure in updating the sound data to be used for the running sounds is prevented, for example.

On the other hand, having small influence on driving, the sound data included in the dynamic layer can be constantly updated. Accordingly, the sound data to be used for the trigger sounds and the sound effects is updated at any appropriate timing.

Fig. 12 illustrates an example of an editing screen for the output sounds (vehicle state sounds in particular) for occupants.

An area 401 is the area for displaying the track numbers of the sound data.

An area 402 is the area for displaying the names of the respective pieces of the sound data.

An area 403 and an area 404 are the areas in which the sound data to be used for the running sound is edited. For example, each straight line in the area 403 and the area 404 represents sound data.

For example, the sound data to be used for the running sound is selected or combined in the area 403 and the area 404. Also, in the area 403 and the area 404, the timing at which the sound data is output is set with respect to the acceleration rate or the like of the vehicle 1. For example, the sound data corresponding to the lowermost straight line in the area 404 starts to be output when the acceleration rate of the vehicle 1 exceeds a predetermined threshold.

An area 405 is the area for setting a curve with respect to the acceleration rate of the vehicle 1. For example, the sound volume, the pitch, and the like of the sound data set in the area 403 and the area 404 change with respect to the acceleration rate of the vehicle 1, in accordance with the curve in the area 405.

An area 406 and an area 407 are the areas for selecting the sound data to be used for a trigger sound, and for setting the trigger for outputting the trigger sound.

In this manner, it is possible to generate a running sound not only from a single piece of sound data but also from a combination of a plurality of appropriate sound data. Also, the sound data to be used for a trigger sound can be selected as desired, and the trigger for outputting the trigger sound can be set as desired.

### <Control on Positions of Sound Images and Sound Fields of the Output Sounds for Occupants>

As described above, the vehicle 1 can achieve 360-degree audio. Also, the seat speakers 242 are provided in the respective seats 204.

Accordingly, the positions of sound images and sound fields of the output sounds for occupants can be set as desired, or can be moved as desired during outputting, for example. Also, the positions of a sound image and a sound field can vary with each type of the output sounds for occupants. Further, the presence/absence of an output of each output sound for occupants, a sound image, a sound field, a sound volume, and the like can be set individually for each of the occupants in the respective seats 204.

In the above manner, outputs of the output sounds for occupants are controlled. The output sounds for occupants then change with the settings determined by an occupant, the situation in which the vehicle 1 is placed, and the like. Thus, the driving feeling (drive feeling) to be felt by the driver with the vehicle 1 is enhanced particularly by the running sound and the trigger sound. Also, the number of types of sounds for occupants becomes larger, and the entertainment properties of the space in the vehicle 1 are enhanced.

### <<3. Modifications>>

In the description below, modifications of the above embodiment of the present technology are explained.

### <Other Modifications>

In the example described above, the output sounds for occupants are controlled on the basis of sound modes and various parameters. However, sounds to be output to the outside of the vehicle 1 (the sounds will be hereinafter also referred to as vehicle exterior sounds) may be controlled in a similar manner. The vehicle exterior sounds include a vehicle running sound for making the pedestrians and the like in the vicinity recognize the presence of the vehicle 1, the sound of the car horn, and the like, for example.

Note that, in a case where the vehicle exterior sounds need to comply with laws and regulations, for example, the vehicle exterior sounds are controlled within the scope of the laws and regulations.

The present technology can also be applied to the output sounds for occupants of mobile objects other than vehicles.

The mobile objects to which the present technology can be applied are not limited to any particular kinds, as long as an occupant can board each mobile object. For example, a motorcycle, a personal mobility, a transportation robot, an airplane, a ship, a construction machine, an agricultural machine, and the like can be considered. Furthermore, the present technology can be applied to mobile objects such as a bicycle, a yacht, a boat, a skateboard, or a snowboard that is moved by a rider's own power without the use of a power source such as a motor or an engine, for example.

In a case where the present technology is applied to some other mobile object, a mobile object state sound that includes a moving sound indicating a change in the moving state of the mobile object and a trigger sound, and is a sound for notifying an occupant of a state of the mobile object is included in the output sounds for occupants, for example. Note that the moving sound in a vehicle is the running sound described above. Further, the output sounds for occupants change on the basis of at least one of the situation in which the mobile object is placed, the state of the mobile object, and the state of the occupant.

As a result, the feeling of driving or steering the mobile object is enhanced. Further, the entertainment properties of the mobile object are enhanced.

### <<4. Others>>

The series of processes described above can be performed by hardware, or can be performed by software. In a case where a series of processes is performed by software, the programs constituting the software are installed into a computer (such as the vehicle control ECU 21, for example).

Note that a program to be executed by the computer may be a program for performing processes in chronological order along the sequence described in the present specification, or a program for performing processes in parallel or at a necessary timing such as when a call is made.

Also, in the present specification, a system means an assembly of a plurality of components (devices, modules (parts), and the like), and it does not matter whether or not all the components are in the same casing. Therefore, a plurality of devices that is housed in separate casings and is connected via a network, and one device in which a plurality of modules is housed in one casing are both systems.

Further, embodiments of the present technology are not limited to the embodiment described above, and various modifications can be made without departing from the scope of the present technology.

For example, the present technology may be embodied in cloud computing in which a function is shared and executed by a plurality of devices via a network.

Also, each step described in the flowchart(s) described above may be carried out by one device, or may be executed by a plurality of devices in a shared manner.

Furthermore, in a case where a plurality of processes is included in one step, the plurality of processes included in the one step may be performed by one device, or may be performed by a plurality of devices in a shared manner.

### <Examples of Configuration Combinations>

The present technology may also provide configurations as described below.

(1) An information processing device including:
   a recognition unit that recognizes a state of a mobile object; and
   an output control unit that controls outputting of an output sound for an occupant, the output sound including a mobile object state sound including a moving sound indicating a change in a moving state of the mobile object and a trigger sound to be output on the basis of a trigger based on the state of the mobile object, the output sound being output toward the occupant of the mobile object.
(2) The information processing device of (1), in which
   the mobile object includes a vehicle, and
   the moving sound includes a running sound indicating a change in a running condition of the vehicle.
(3) The information processing device of (2), in which
   the recognition unit recognizes at least one of a situation in which the vehicle is placed, a state of the vehicle, or a state of the occupant, and
   the output control unit changes the output sound for the occupant, on the basis of at least one of a setting operation performed by the occupant, the situation in which the vehicle is placed, the state of the vehicle, or the state of the occupant.
(4) The information processing device of (3), in which
   the output control unit changes the output sound for the occupant, on the basis of a combination of a sound mode indicating a type of the output sound for the occupant and a parameter indicating at least one of the situation in which the vehicle is placed, the state of the vehicle, or the state of the occupant.
(5) The information processing device of (4), in which
   the sound mode includes at least one of a characteristics mode indicating characteristics of the output sound for the occupant, an other-vehicle mode for imitating a sound of a vehicle of a different vehicle type from the vehicle, an other-mobile-object mode for imitating a sound of a mobile object of a different type from the vehicle, a content mode for expressing a world view of entertainment content, an anthropomorphic mode for personifying the mobile object, or a suppression mode for reducing outputs of the output sound for the occupant.
(6) The information processing device of (5), in which,
   in the content mode, the output sound for the occupant includes a sound imitating a character that appears in the content.
(7) The information processing device of any one of (4) to (6), in which
   the output control unit sets the sound mode, on the basis of at least one of the setting operation performed by the occupant, the situation in which the vehicle is placed, the state of the vehicle, or the state of the occupant.
(8) The information processing device of any one of (4) to (7), in which
   the parameter includes at least one of an operating state of a regenerative brake of the vehicle, power of the vehicle, a velocity of the vehicle, a drive mode of the vehicle, an attribute of the occupant, a situation around the vehicle, a place where the vehicle is running, a season, or a time of a day.
(9) The information processing device of any one of (3) to (8), in which
   the state of the vehicle includes a theme of an instrument panel that is set in the vehicle.
(10) The information processing device of any one of (3) to (9), in which
   the situation in which the vehicle is placed includes a situation around the vehicle, a situation inside the vehicle, and a temporal situation in which the vehicle is running.
(11) The information processing device of any one of (2) to (10), in which
   the trigger sound includes at least one of a sound to be output with a trigger being a start of stepping on an accelerator pedal, a sound to be output with a trigger being a start of stepping on a brake pedal, a sound to be output on the basis of a trigger based on a velocity of the vehicle, or a sound to be output on the basis of a trigger based on automated headlight control.
(12) The information processing device of any one of (2) to (11), in which
   the running sound includes sounds corresponding to a motor sound and an engine sound of the vehicle.
(13) The information processing device of any one of (1) to (12), in which
   the output sound for the occupant includes a sound effect.
(14) The information processing device of (13), in which
   the sound effect includes at least one of a navigation sound to be output for navigation for a destination, an operation sound to be output in accordance with an operation performed on the mobile object, a warning sound for the occupant, an achievement sound to be output when a matter related to driving or steering is achieved by the mobile object or the occupant, or an occupant sound to be output in accordance with a state of the occupant.
(15) The information processing device of (1), in which
   the recognition unit recognizes at least one of a situation in which the mobile object is placed, the state of the mobile object, or a state of the occupant, and
   the output control unit changes the output sound for the occupant, on the basis of at least one of a setting operation performed by the occupant, the situation in which the mobile object is placed, the state of the mobile object, or the state of the occupant.
(16) The information processing device of any one of (1) to (15), in which,
   in a case where a silent state of the mobile object is permitted, the output control unit updates sound data to be used for the moving sound.
(17) An information processing method including:
   recognizing a state of a mobile object; and
   controlling outputting of an output sound for an occupant, the output sound including a mobile object state sound including a moving sound indicating a change in a moving state of the mobile object and a trigger sound to be output on the basis of a trigger based on the state of the mobile object, the output sound being output toward the occupant of the mobile object.
(18) A program for causing a computer to perform a process of:
   recognizing a state of a mobile object; and
   controlling outputting of an output sound for an occupant, the output sound including a mobile object state sound including a moving sound indicating a change in a moving state of the mobile object and a trigger sound to be output on the basis of a trigger based on the state of the mobile object, the output sound being output toward the occupant of the mobile object.
(19) A mobile object which an occupant rides,
   the mobile object including:
   a recognition unit that recognizes a state of the mobile object;
   an output control unit that controls outputting of an output sound for an occupant, the output sound including a mobile object state sound including a moving sound indicating a change in a moving state of the mobile object and a trigger sound to be output on the basis of a trigger based on the state of the mobile object, the output sound being output toward the occupant; and
   an output unit that outputs the output sound for the occupant.

Note that the effects described in the present specification are merely examples and are not limited, and other effects may be achieved.

### REFERENCE SIGNS LIST

- 1: Vehicle
- 11: Vehicle control system
- 21: Vehicle control ECU
- 30: DMS
- 31: HMI
- 32: Vehicle control unit
- 73: Recognition unit
- 231: Center display
- 241FL to 241BR: Speaker
- 242FL to 242BR: Seat speaker
- 261: Information processing unit
- 271: Recognition unit
- 272: Output control unit

## Claims

1. An information processing device comprising:
a recognition unit that recognizes a state of a mobile object; and
an output control unit that controls outputting of an output sound for an occupant, the output sound including a mobile object state sound including a moving sound indicating a change in a moving state of the mobile object and a trigger sound to be output on a basis of a trigger based on the state of the mobile object, the output sound being output toward the occupant of the mobile object.

2. The information processing device according to claim 1, wherein
the mobile object includes a vehicle, and
the moving sound includes a running sound indicating a change in a running condition of the vehicle.

3. The information processing device according to claim 2, wherein
the recognition unit recognizes at least one of a situation in which the vehicle is placed, a state of the vehicle, or a state of the occupant, and
the output control unit changes the output sound for the occupant, on a basis of at least one of a setting operation performed by the occupant, the situation in which the vehicle is placed, the state of the vehicle, or the state of the occupant.

4. The information processing device according to claim 3, wherein
the output control unit changes the output sound for the occupant, on a basis of a combination of a sound mode indicating a type of the output sound for the occupant and a parameter indicating at least one of the situation in which the vehicle is placed, the state of the vehicle, or the state of the occupant.

5. The information processing device according to claim 4, wherein
the sound mode includes at least one of a characteristics mode indicating characteristics of the output sound for the occupant, an other-vehicle mode for imitating a sound of a vehicle of a different vehicle type from the vehicle, an other-mobile-object mode for imitating a sound of a mobile object of a different type from the vehicle, a content mode for expressing a world view of entertainment content, an anthropomorphic mode for personifying the mobile object, or a suppression mode for reducing outputs of the output sound for the occupant.

6. The information processing device according to claim 5, wherein,
in the content mode, the output sound for the occupant includes a sound imitating a character that appears in the content.

7. The information processing device according to claim 4, wherein
the output control unit sets the sound mode, on a basis of at least one of the setting operation performed by the occupant, the situation in which the vehicle is placed, the state of the vehicle, or the state of the occupant.

8. The information processing device according to claim 4, wherein
the parameter includes at least one of an operating state of a regenerative brake of the vehicle, power of the vehicle, a velocity of the vehicle, a drive mode of the vehicle, an attribute of the occupant, a situation around the vehicle, a place where the vehicle is running, a season, or a time of a day.

9. The information processing device according to claim 3, wherein
the state of the vehicle includes a theme of an instrument panel that is set in the vehicle.

10. The information processing device according to claim 3, wherein
the situation in which the vehicle is placed includes a situation around the vehicle, a situation inside the vehicle, and a temporal situation in which the vehicle is running.

11. The information processing device according to claim 2, wherein
the trigger sound includes at least one of a sound to be output with a trigger being a start of stepping on an accelerator pedal, a sound to be output with a trigger being a start of stepping on a brake pedal, a sound to be output on a basis of a trigger based on a velocity of the vehicle, or a sound to be output on a basis of a trigger based on automated headlight control.

12. The information processing device according to claim 2, wherein
the running sound includes sounds corresponding to a motor sound and an engine sound of the vehicle.

13. The information processing device according to claim 1, wherein
the output sound for the occupant includes a sound effect.

14. The information processing device according to claim 13, wherein
the sound effect includes at least one of a navigation sound to be output for navigation for a destination, an operation sound to be output in accordance with an operation performed on the mobile object, a warning sound for the occupant, an achievement sound to be output when a matter related to driving or steering is achieved by the mobile object or the occupant, or an occupant sound to be output in accordance with a state of the occupant.

15. The information processing device according to claim 1, wherein
the recognition unit recognizes at least one of a situation in which the mobile object is placed, the state of the mobile object, or a state of the occupant, and
the output control unit changes the output sound for the occupant, on a basis of at least one of a setting operation performed by the occupant, the situation in which the mobile object is placed, the state of the mobile object, or the state of the occupant.

16. The information processing device according to claim 1, wherein,
in a case where a silent state of the mobile object is permitted, the output control unit updates sound data to be used for the moving sound.

17. An information processing method comprising:
recognizing a state of a mobile object; and
controlling outputting of an output sound for an occupant, the output sound including a mobile object state sound including a moving sound indicating a change in a moving state of the mobile object and a trigger sound to be output on a basis of a trigger based on the state of the mobile object, the output sound being output toward the occupant of the mobile object.

18. A program for causing a computer to perform a process of:
recognizing a state of a mobile object; and
controlling outputting of an output sound for an occupant, the output sound including a mobile object state sound including a moving sound indicating a change in a moving state of the mobile object and a trigger sound to be output on a basis of a trigger based on the state of the mobile object, the output sound being output toward the occupant of the mobile object.

19. A mobile object which an occupant rides,
the mobile object comprising:
a recognition unit that recognizes a state of the mobile object;
an output control unit that controls outputting of an output sound for an occupant, the output sound including a mobile object state sound including a moving sound indicating a change in a moving state of the mobile object and a trigger sound to be output on a basis of a trigger based on the state of the mobile object, the output sound being output toward the occupant; and
an output unit that outputs the output sound for the occupant.
